# EUROPÄISCHE PATENTSCHRIFT

(11) **EP 3 401 244 B1**
(45) Veröffentlichungstag und Bekanntmachung des Hinweises auf die Patenterteilung: **09.11.2022**
(21) Anmeldenummer: 17170817.5
(22) Anmeldetag: 12.05.2017
(51) Int. Cl.: B65G 21/08, B65G 69/18, B65G 69/20, C21B 13/00, F27B 9/00, F27D 17/00, F27D 15/02

(54) **FÖRDERN EINES FÖRDERGUTS**
CONVEYANCE OF AN ITEM TO BE CONVEYED
ACHEMINEMENT D'UN PRODUIT

(43) Veröffentlichungstag der Anmeldung: 14.11.2018
(73) Patentinhaber: Primetals Technologies Austria GmbH, 4031 Linz (AT)
(72) Erfinder: Rosenfellner, Gerald, 3355 Ertl (AT)
(74) Vertreter: Metals@Linz

(56) Entgegenhaltungen:
- WO-A1-01/64521
- DE-U1- 20 302 678
- KR-A- 20040 042 020
- US-A- 3 036 440
- US-A- 3 096 627
- US-A1- 2008 251 356
- US-A1- 2011 318 698

## Beschreibung

Die Erfindung betrifft ein Verfahren zum Betrieb einer Förderanlage zum Fördern eines reaktiven und/oder heißen und/oder abrasiven Förderguts.

Unter einem reaktiven Fördergut wird hier ein Fördergut verstanden, das chemisch oder/und physikalisch mit die Förderanlage umgebenden Umgebungsstoffen, beispielsweise mit Luft, insbesondere mit dem Sauerstoff der Luft, reagieren kann. Derartige Reaktionen sind in der Regel unerwünscht, da sie beispielsweise zur Oxidation des Förderguts und/oder zur übermäßigen Erhitzung des Förderguts führen können und/oder gesundheitsschädliches und/oder umweltschädliches Fluid, beispielsweise Entgasungsgas, und/oder Staub freisetzen können. Um den Kontakt eines Förderguts mit Umgebungsstoffen zu vermeiden oder zu reduzieren, wird oft ein Fluid, beispielsweise ein Inertgas wie Stickstoff oder ein Gasgemisch aus Stickstoff und maximal 3% Sauerstoff oder ein Gasgemisch, das aus den chemischen Komponenten eines Rauchgases besteht, eingesetzt, um Umgebungsstoffe aus der Umgebung des Förderguts zu verdrängen. Unter einem Fluid wird hier ein Gas oder eine Flüssigkeit verstanden.

US 2011/318698 A1 offenbart ein Verfahren nach dem Oberbegriff des Anspruchs 1.

Der Erfindung liegt die Aufgabe zugrunde, eine Förderanlage und ein Verfahren zum Fördern eines reaktiven Förderguts anzugeben, die insbesondere hinsichtlich des Verbrauchs an Fluid zur Verdrängung von Umgebungsstoffen aus der Umgebung des Förderguts verbessert sind.

Die Aufgabe wird erfindungsgemäß durch ein Verfahren nach Anspruch 1 gelöst.

Vorteilhafte Ausgestaltungen der Erfindung sind Gegenstand der Unteransprüche.

Die Förderanlage des Verfahrens umfasst ein den Förderweg umhüllendes Anlagengehäuse, das wenigstens einen Fluideinlass zur Einleitung von Fluid in das Anlagengehäuse, wenigstens einen Fluidauslass zur Ausgabe von Fluid aus dem Anlagengehäuse und einen Chargiereinlass zum Einbringen von Fördergut in das Anlagengehäuse aufweist und bis auf den wenigstens einen Fluideinlass, den wenigstens einen Fluidauslass und den Chargiereinlass technisch fluiddicht ausgeführt ist.

Im Folgenden wird unter Fluiddichtheit jeweils technische Fluiddichtheit verstanden.

Die Anordnung des Förderwegs in einem Anlagengehäuse ermöglicht eine weitgehende Kapselung des Förderwegs gegenüber dessen Umgebung, so dass das Fördergut gegenüber Umgebungsstoffen weitgehend abgeschottet ist. Durch die weitgehend fluiddichte Ausführung des Anlagengehäuses wird ein Austreten von Fluid aus dem Anlagengehäuse auf die Fluidauslässe begrenzt, so dass nur eine relativ geringe Menge von Fluid aus dem Anlagengehäuse entweicht. Ferner ermöglicht sie, aus dem Anlagengehäuse austretendes Fluid gezielt an den Fluidauslässen wenigstens teilweise aufzufangen und dem Anlagengehäuse wieder zuzuführen. Dadurch werden der Verbrauch und die Kosten des eingesetzten Fluids vorteilhaft reduziert. Auch Entgasungsgas und sich in dem Anlagengehäuse bildender Staub können gezielt an den Fluidauslässen abgeführt werden. Dadurch entfallen vorteilhaft separate Auffang- und Entsorgungsvorrichtungen an anderen Stellen für aus dem Anlagengehäuse austretenden Staub oder austretendes Entgasungsgas.

Erfindungsgemäß wird es vorgesehen, dass das Anlagengehäuse eine Ausgabeöffnung zur Ausgabe von Fördergut aus dem Anlagengehäuse aufweist, und dass die Ausgabeöffnung ein Fluidauslass oder ein Fluideinlass des Anlagengehäuses ist. Dadurch kann Fluid durch die ohnehin vorhandene Ausgabeöffnung des Anlagengehäuses ab- oder eingeführt werden. Ferner wird vorteilhaft eine Fluidströmungsrichtung, in der das Fluid durch das Anlagengehäuse strömt, einer Förderrichtung angeglichen, in der das Fördergut zu der Ausgabeöffnung transportiert wird. Des Weiteren können Turbulenzen in dem Fluidstrom vorteilhaft reduziert werden.

Eine weitere Ausgestaltung der Erfindung sieht vor, dass die Ausgabeöffnung durch ein Absperrorgan verschließbar ist. Das Absperrorgan kann beispielsweise einen oder mehrere voneinander beabstandete Absperrschieber zum Verschließen der Ausgabeöffnung aufweisen. Dadurch kann beispielsweise im Falle einer Notabschaltung der Förderanlage ein Austreten von Fluid und Entgasungsgas aus der Ausgabeöffnung verhindert werden. Durch mehrere voneinander beabstandete Absperrschieber kann die Ausgabeöffnung insbesondere schleusenartig fluiddicht verschlossen werden.

Eine weitere Ausgestaltung der Erfindung sieht wenigstens ein an dem Anlagengehäuse angeordnetes Sicherheitsorgan vor, das zum Auslass von Fluid aus dem Anlagengehäuse, wenn ein Fluiddruck in dem Anlagengehäuse einen Druckschwellenwert überschreitet, oder zur Regelung des Fluiddrucks, um den Fluiddruck in einem kontrollierten Druckbereich zu halten, ausgebildet ist. Dadurch kann vorteilhaft ein Überdruck in dem Anlagengehäuse verhindert werden.

Erfindungsgemäß wird ein Fluidkreislaufsystem vorgesehen, welches zum Einleiten von Fluid in das Anlagengehäuse durch wenigstens einen Fluideinlass und zum Auffangen und Wiederverwenden von durch wenigstens einen Fluidauslass aus dem Anlagengehäuse austretendem Fluid ausgebildet ist. Durch ein derartiges Fluidkreislaufsystem kann vorteilhaft der Verbrauch von Fluid weiter gesenkt werden, da aus dem Anlagengehäuse Fluid abgezogen und über das Fluidkreislaufsystem dem Anlagengehäuse wieder zugeführt wird, so dass dieses Fluid in dem Fluidkreislaufsystem verbleibt.

Das Fluidkreislaufsystem kann insbesondere eine Strömungsmaschine zum Einleiten von Fluid in das Anlagengehäuse aufweisen. Dadurch kann vorteilhaft die Fluidströmungsrichtung des Fluids in das Anlagengehäuse hinein und durch das Anlagengehäuse hindurch beeinflusst werden.

Ferner kann das Fluidkreislaufsystem einen Wärmetauscher zur Kühlung des Fluids oder/und eine Fluidreinigungseinheit zur Reinigung aus dem Anlagengehäuse austretenden Fluids aufweisen. Ein Wärmetauscher zur Kühlung des Fluids ist besonders in Fällen vorteilhaft, in denen in dem Anlagengehäuse ein heißes Fördergut transportiert wird und zu kühlende Komponenten einer Fördermechanik zur Förderung des Förderguts angeordnet sind. In diesen Fällen kann das in das Anlagengehäuse geleitete und durch den Wärmetauscher abgekühlte Fluid vorteilhaft auch zur Kühlung von Komponenten der Fördermechanik eingesetzt werden. Durch eine Fluidreinigungseinheit kann aus dem Anlagengehäuse abgezogenes Fluid gereinigt werden, beispielsweise von Entgasungsgas und/oder von Staub, die sich in dem Anlagengehäuse bilden und mit dem Fluid transportiert werden. Eine weitere Ausgestaltung der Erfindung sieht vor, dass der Chargiereinlass durch ein Absperrorgan fluiddicht verschließbar ist. Dadurch kann beispielsweise im Falle einer Notabschaltung der Förderanlage ein Austreten von Fluid und Entgasungsgas aus dem Chargiereinlass verhindert werden.

Erfindungsgemäß wird ein Fluid durch den wenigstens einen Fluideinlass in das Anlagengehäuse eingeleitet und in einer Fluidströmungsrichtung, die im Wesentlichen parallel zu einer Förderrichtung ist, in der Fördergut durch das Anlagengehäuse transportiert wird, durch das Anlagengehäuse zu dem wenigstens einen Fluidauslass geleitet. Dadurch können Fluid, mit dem Fluid geführtes Entgasungsgas und/oder mit dem Fluid geführter Staub in einer definierten Fluidströmungsrichtung durch das Anlagengehäuse zu den Fluidauslässen geleitet und dort abgeführt werden. Ferner können überdies vorteilhaft Turbulenzen der Fluid-, Entgasungsgas- und Staubströmungen in dem Anlagengehäuse reduziert werden.

Erfindungsgemäß wird es vorgesehen, dass eine Fluidatmosphäre in dem Anlagengehäuse derart geregelt wird, dass sie einem Eindringen von einem Störfluid aus einem dem Anlagengehäuse benachbarten Nachbaraggregat in das Anlagengehäuse entgegenwirkt. Unter einer Fluidatmosphäre in dem Anlagengehäuse werden die chemischen und physikalischen Eigenschaften, beispielsweise die chemische Zusammensetzung, der Druck oder die Temperatur, eines Fluids verstanden, das sich in dem Anlagengehäuse befindet. Unter einem Störfluid wird ein in dem Anlagengehäuse nicht erwünschtes Fluid verstanden. Typische Störfluide sind sauerstoffhaltige Gase oder Gase, die mindestens eine unerwünschte chemische Komponente in zu hoher Konzentration enthalten, oder Fluide, die zu heiß oder zu kalt sind. Die einem Eindringen von Störfluid in das Anlagengehäuse entgegenwirkende Regelung der Fluidatmosphäre in dem Anlagengehäuse verhindert insbesondere, dass durch Druckschwankungen in einem Nachbaraggregat eine größere Störfluidmenge in das Anlagengehäuse gelangt und die Qualität des Förderguts beeinträchtigt.

Erfindungsgemäß wird ein Fluiddruck in dem Anlagengehäuse auf einen Sollwert geregelt, der größer als ein momentaner Störfluiddruck in dem Nachbaraggregat ist. Beispielsweise wird dabei ein Differenzdruck zwischen dem Fluiddruck in dem Anlagengehäuse und dem Störfluiddruck in dem Nachbaraggregat erfasst und ein in das Anlagengehäuse eingeleiteter Fluidstrom wird in Abhängigkeit von dem Differenzdruck geregelt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
FIG 1 schematisch ein erstes Ausführungsbeispiel einer Förderanlage,
FIG 2 schematisch eine Schnittdarstellung der in Figur 1 dargestellten Förderanlage im Bereich einer Ausgabeöffnung zur Ausgabe von Fördergut aus dem Anlagengehäuse bei geöffneter Ausgabeöffnung,
FIG 3 schematisch eine Schnittdarstellung der in Figur 2 gezeigten Förderanlage bei geschlossener Ausgabeöffnung,
FIG 4 schematisch eine Schnittdarstellung eines zweiten Ausführungsbeispiels einer Förderanlage im Bereich einer Ausgabeöffnung zur Ausgabe von Fördergut, und
FIG 5 schematisch eine Schnittdarstellung eines dritten Ausführungsbeispiels einer Förderanlage im Bereich einer Ausgabeöffnung zur Ausgabe von Fördergut.

Einander entsprechende Teile sind in den Figuren mit denselben Bezugszeichen versehen.

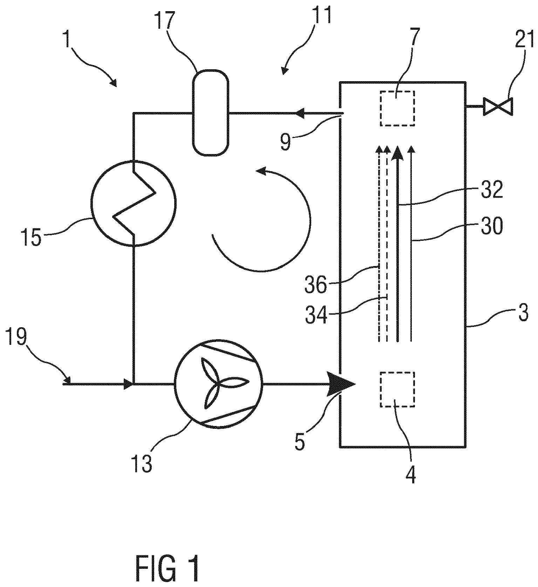

Figur 1 zeigt schematisch ein Ausführungsbeispiel einer Förderanlage 1 zum Fördern eines reaktiven und/oder heißen und/oder abrasiven Förderguts entlang eines Förderwegs. Die Förderanlage 1 weist ein Anlagengehäuse 3 auf, in der der Förderweg angeordnet ist. Das Anlagengehäuse 3 weist einen Chargiereinlass 4 zum Einbringen von Fördergut in das Anlagengehäuse, einen Fluideinlass 5 zur Einleitung von Fluid in das Anlagengehäuse 3 und zwei Fluidauslässe 7, 9 zur Ausgabe von Fluid aus dem Anlagengehäuse 3 auf. Ein erster Fluidauslass 7 ist eine Ausgabeöffnung zur Ausgabe von Fördergut aus dem Anlagengehäuse 3. Das Anlagengehäuse 3 ist bis auf den wenigstens den Fluideinlass 5, die Fluidauslässe 7, 9 und den Chargiereinlass 4 fluiddicht ausgeführt.

Ferner weist die Förderanlage 1 ein Fluidkreislaufsystem 11 auf, welches zum Einleiten von Fluid in das Anlagengehäuse und zum Auffangen und Wiederverwenden von aus dem Anlagengehäuse 3 abgezogenen Fluid ausgebildet ist. Das in das Anlagengehäuse 3 eingeleitete Fluid ist beispielsweise ein Inertgas wie Stickstoff, kann aber alternativ auch eine Flüssigkeit sein.

Das Fluidkreislaufsystem 11 leitet Fluid durch den Fluideinlass 5 in das Anlagengehäuse 3 ein, durch das Anlagengehäuse 3 hindurch und durch den zweiten Fluidauslass 9 aus dem Anlagengehäuse 3 heraus. Ferner leitet das Fluidkreislaufsystem 11 das durch den zweiten Fluidauslass 9 aus dem Anlagengehäuse 3 austretende Fluid über eine Strömungsmaschine 13 und optional über einen Wärmetauscher 15 und/oder eine Fluidreinigungseinheit 17 durch den Fluideinlass 5 wieder in das Anlagengehäuse 3 ein. Ferner weist das Fluidkreislaufsystem 11 eine Fluidzuführung 19 auf, durch die dem Fluidkreislaufsystem 11 Fluid zuführbar ist, insbesondere um Fluid zu ersetzen, das aus dem Anlagengehäuse 3 durch den ersten Fluidauslass 7 austritt. Die Strömungsmaschine 13 ist beispielsweise ein Gebläse oder ein Kompressor oder ein anderes Druckerhöhungsaggregat oder eine Pumpe, je nachdem, ob das Fluid ein Gas oder eine Flüssigkeit ist. Durch die Strömungsmaschine 13 wird das Fluid mit einem Druck in das Anlagengehäuse 3 eingeleitet, der größer als ein Druck in dem Anlagengehäuse 3 ist, so dass Fluid durch den Fluideinlass 5 in das Anlagengehäuse 3 eintritt, aber nicht aus dem Anlagengehäuse 3 austritt. Der Fluideinlass 5 ist bei diesem Ausführungsbeispiel in der Nähe des Chargiereinlasses 4 angeordnet. Der zweite Fluidauslass 9 ist in der Nähe des ersten Fluidauslasses 7 angeordnet. Dadurch wird das Fluid in einer Fluidströmungsrichtung 30, die im Wesentlichen parallel zu einer Förderrichtung 32, in der Fördergut durch das Anlagengehäuse 3 transportiert wird, durch das Anlagengehäuse 3 zu den Fluidauslässen 7, 9 geleitet. Ferner werden mit dem Fluid auch in dem Anlagengehäuse 3 entstehendes Entgasungsgas in einer Entgasungsströmungsrichtung 34, die im Wesentlichen parallel zu einer Förderrichtung 32 ist, und sich in dem Anlagengehäuse 3 bildender Staub in einer Staubströmungsrichtung 36, die im Wesentlichen parallel zu einer Förderrichtung 32 ist, durch das Anlagengehäuse 3 zu den Fluidauslässen 7, 9 geleitet. Bei anderen Ausführungsbeispielen können der Fluideinlass 5 und/oder der zweite Fluidauslass 9 auch an anderen Stellen als an den in Figur 1 gezeigten Stellen des Anlagengehäuses 3 angeordnet, beispielsweise gegenüber Figur 1 miteinander vertauscht, sein. Alternativ könnte Fluid auch einem der Förderanlage 1 nachgeschalteten oder vorgeschalteten Aggregat, beispielsweise einem Bunker, zugeführt und aus diesem Aggregat dem Anlagengehäuse 3 über das Fluidkreislaufsystem 11 wieder zugeführt werden, so dass das Aggregat Teil des Fluidkreislaufsystems 11 wird. In diesem Fall kann vorteilhaft mit dem Fluid auch Staub aus dem Anlagengehäuse 3 in das nach- oder vorgeschaltete Aggregat abgeführt beziehungsweise dadurch entsorgt werden. Ferner kann optional am Chargiereinlass 4 eine Entstaubungsvorrichtung vorgesehen sein, wobei über die Fluidzuführung 19 mehr Fluid zugeführt wird als durch die Entstaubungsvorrichtung aus dem Anlagengehäuse 3 abgeführt wird.

Der optionale Wärmetauscher 15 dient der Kühlung des Fluids. Er ist besonders in Fällen vorteilhaft, in denen in dem Anlagengehäuse 3 ein heißes Fördergut transportiert wird und zu kühlende Komponenten einer Fördermechanik 23 zur Förderung des Förderguts angeordnet sind. In diesen Fällen kann das in das Anlagengehäuse 3 geleitete und durch den Wärmetauscher 15 abgekühlte Fluid vorteilhaft auch zur Kühlung von Komponenten der Fördermechanik 23 eingesetzt werden. Durch die optionale Fluidreinigungseinheit 17 kann aus dem Anlagengehäuse 3 abgezogenes Fluid gereinigt werden, beispielsweise von Entgasungsgas und/oder von Staub, die sich in dem Anlagengehäuse 3 bilden und von dem Fluid transportiert werden.

Durch die weitgehend fluiddichte Ausführung des Anlagengehäuses 3 wird ein Austreten von Fluid aus dem Anlagengehäuse 3 auf die Fluidauslässe 7, 9 begrenzt, so dass nur eine relativ geringe Menge von Fluid aus dem Anlagengehäuse 3 entweicht. Ferner wird dem Anlagengehäuse 3 aus dem zweiten Fluidauslass 9 abgeführtes Fluid durch das Fluidkreislaufsystem 11 über den ersten Fluideinlass 5 wieder zugeführt, so dass dieses Fluid in dem Fluidkreislaufsystem 11 verbleibt. Insgesamt kann dadurch die dem Fluidkreislaufsystem 11 zuzuführende Menge von Fluid relativ gering gehalten werden. Dadurch werden der Verbrauch von Fluid und die Kosten für das Fluid vorteilhaft reduziert.

Typischerweise sind die durch den ersten Fluideinlass 5 und den zweiten Fluidauslass 9 fließenden Fluidströme wesentlich größer als der durch den ersten Fluidauslass 7 fließende Fluidstrom. Beispielsweise können der durch den ersten Fluideinlass 5 fließende Fluidstrom etwa 1600 m³/h, der durch den zweiten Fluidauslass 9 fließenden Fluidstrom etwa 1500 m³/h und der durch den ersten Fluidauslass 7 fließende Fluidstrom etwa 100 m³/h betragen, wobei dem Fluidkreislaufsystem 11 über die Fluidzuführung 19 etwa 100 m³/h Fluid zugeführt werden, um das durch den ersten Fluidauslass 7 abfließende Fluid zu ersetzen.

Ein weiterer Vorteil der weitgehend fluiddichten Ausführung des Anlagengehäuses 3 und der Fluidströmungsrichtung 30 ist, dass Entgasungsgas und Staub ebenfalls zu den Fluidauslässen 7, 9 geleitet und dort entsorgt werden können.

An dem Anlagengehäuse 3 ist ein als ein Sicherheitsventil ausgebildetes Sicherheitsorgan 21 angeordnet, das zum Auslass von Fluid aus dem Anlagengehäuse 3 ausgebildet ist, wenn ein Fluiddruck in dem Anlagengehäuse 3 einen Druckschwellenwert überschreitet.

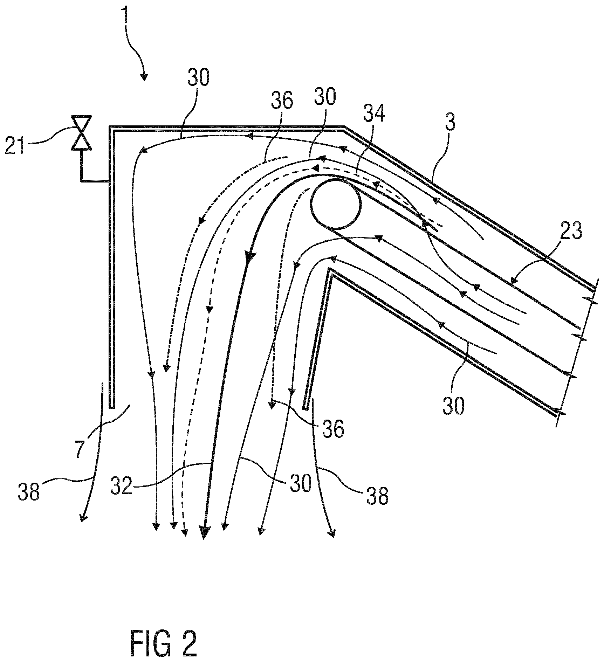

Figur 2 zeigt schematisch eine Schnittdarstellung der Förderanlage 1 im Bereich des ersten Fluidauslasses 7, der gleichzeitig die Ausgabeöffnung des Anlagengehäuses 3 ist. Das Fördergut wird von der Fördermechanik 23 zu dem ersten Fluidauslass 7 transportiert und dort nach unten durch den Fluidauslass 7 ausgegeben. Mit dem Fördergut werden auch Fluid, Entgasungsgas und Staub aus dem Fluidauslass 7 ausgegeben. Da Entgasungsgas und Staub mit dem Fördergut aus dem Fluidauslass 7 ausgegeben werden, können sie mit dem Fördergut zusammen abgeführt und entsorgt werden. Dadurch entfallen vorteilhaft separate Auffang- und Entsorgungsvorrichtungen an anderen Stellen für aus dem Anlagengehäuse 3 austretenden Staub oder austretendes Entgasungsgas.

Optional kann vorgesehen sein, den Fluidauslass 7 mit einem Gasschleier 38 zu umströmen, der die aus dem Fluidauslass 7 austretende Materie (Fördergut, Fluid, Entgasungsgas, Staub) umhüllt.

Die erste Fluidauslass 7 kann ferner durch ein Absperrorgan 40 verschließbar sein.

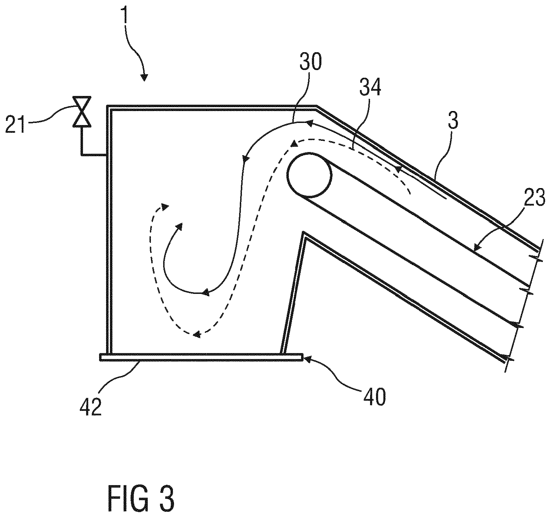

Figur 3 zeigt eine Schnittdarstellung der Förderanlage 1 im Bereich des ersten Fluidauslasses 7, der durch ein Absperrorgan 40 verschlossen ist. Das Absperrorgan 40 weist beispielsweise einen Absperrschieber 42 zum Verschließen des ersten Fluidauslasses 7 auf. Dadurch kann beispielsweise im Falle einer Notabschaltung der Förderanlage 1 ein Austreten von Fluid und Entgasungsgas aus dem ersten Fluidauslass 7 verhindert werden. Entsprechend kann auch der Chargiereinlass 4 durch ein Absperrorgan 40 fluiddicht verschließbar sein.

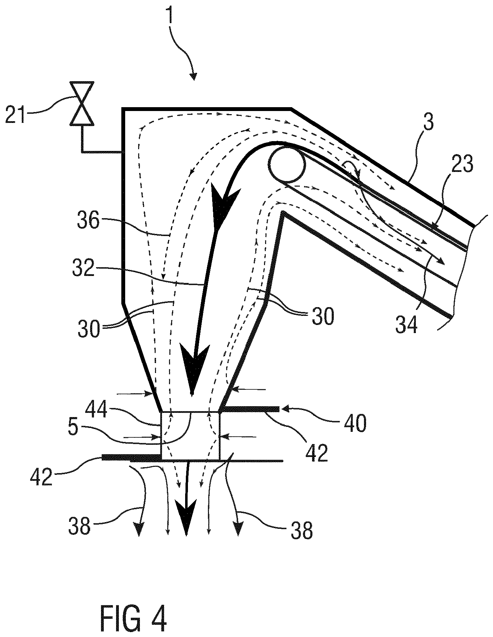

Figur 4 zeigt schematisch eine Schnittdarstellung eines zweiten Ausführungsbeispiels einer Förderanlage 1 im Bereich einer Ausgabeöffnung zur Ausgabe von Fördergut. Dieses Ausführungsbeispiel unterscheidet sich von dem in den Figuren 1 bis 3 dargestellten Ausführungsbeispiel unter anderem dadurch, dass die Ausgabeöffnung ein Fluideinlass 5 zum Einleiten von Fluid in das Anlagengehäuse 3 ist. Das Fluid und das Entgasungsgas strömen im Wesentlichen parallel, aber im Unterschied zu Figur 2 zumindest entlang eines Teilabschnitts des Förderwegs entgegensetzt zu einer Förderrichtung 32 des Förderguts und einer Staubströmungsrichtung 36 von Staub innerhalb des Anlagengehäuses 3. Ein weiterer Unterschied zu der in den Figuren 1 bis 3 dargestellten Förderanlage 1 ist, dass das Absperrorgan 40 zwei voneinander beabstandete Absperrschieber 42 aufweist und zwischen den Absperrschiebern 42 ein Hilfsaggregat 44 angeordnet ist. Das Hilfsaggregat 44 ist beispielsweise eine Zellenradschleuse zum Ausschleusen von Fördergut aus dem Anlagengehäuse 3.

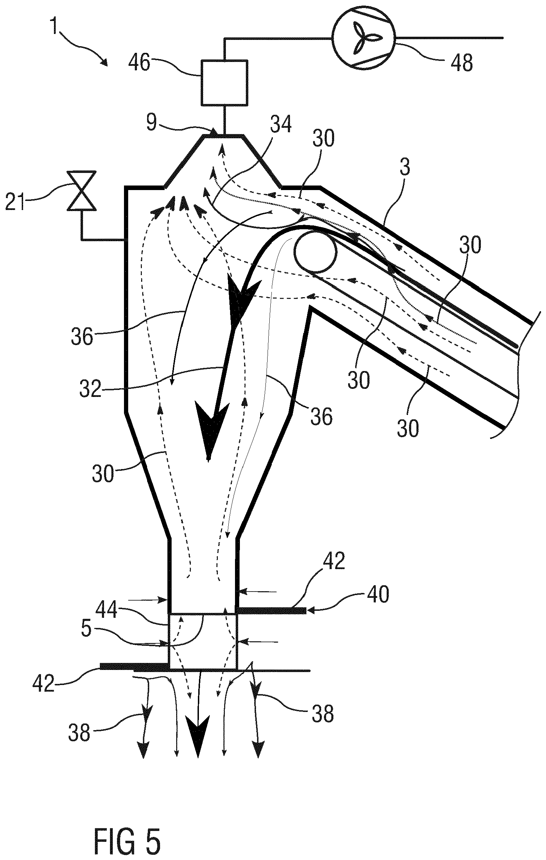

Figur 5 zeigt schematisch eine Schnittdarstellung eines dritten Ausführungsbeispiels einer Förderanlage 1 im Bereich einer Ausgabeöffnung zur Ausgabe von Fördergut. Dieses Ausführungsbeispiel unterscheidet sich von dem in Figur 4 dargestellten Ausführungsbeispiel dadurch, dass Fluid sowohl durch die Ausgabeöffnung als auch durch einen weiteren (in Figur 5 nicht dargestellten) Fluideinlass 5 in das Anlagengehäuse 3 geleitet wird, wobei die Fluidströmungsrichtung 30 des durch die Ausgabeöffnung in das Anlagengehäuse 3 eingeleitenden Fluids zumindest entlang eines Teilabschnitts des Förderwegs im Wesentlichen entgegensetzt zu einer Förderrichtung 32 des Förderguts ist und die Fluidströmungsrichtung 30 des durch den weiteren Fluideinlass 5 in das Anlagengehäuse 3 geleiteten Fluids im Wesentlichen mit der Förderrichtung 32 übereinstimmt. Außerdem weist das Anlagengehäuse 3 einen Fluidauslass 9 auf, durch den Fluid aus dem Anlagengehäuse 3 abgeführt wird und dem ein Filtersystem 46 zur Filterung von Feinstaub und ein Unterdruckerzeuger 48 zum Ansaugen von Fluid aus dem Anlagengehäuse 3 nachgeschaltet sind. Fluid, das durch den Fluidauslass 9 aus dem Anlagengehäuse 3 abgeführt wird, wird beispielsweise entweder entsorgt oder wenigstens zu einem Teil wiederverwendet, indem es über ein Fluidkreislaufsystem 11 analog zu Figur 1 dem Anlagengehäuse 3 wieder zugeführt wird.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Ansprüche zu verlassen.

### Bezugszeichenliste

- 1: Förderanlage
- 3: Anlagengehäuse
- 4: Chargiereinlass
- 5: Fluideinlass
- 7, 9: Fluidauslass
- 11: Fluidkreislaufsystem
- 13: Strömungsmaschine
- 15: Wärmetauscher
- 17: Fluidreinigungseinheit
- 19: Fluidzuführung
- 21: Sicherheitsorgan
- 23: Fördermechanik
- 30: Fluidströmungsrichtung
- 32: Förderrichtung
- 34: Entgasungsströmungsrichtung
- 36: Staubströmungsrichtung
- 38: Gasschleier
- 40: Absperrorgan
- 42: Absperrschieber
- 44: Hilfsaggregat
- 46: Filtersystem
- 48: Unterdruckerzeuger

## Patentansprüche

1. Verfahren zum Betrieb einer Förderanlage (1) zum kontinuierlichen oder diskontinuierlichen Fördern eines reaktiven und/oder heißen und/oder abrasiven Förderguts entlang eines Förderwegs, die Förderanlage (1) umfassend ein den Förderweg umhüllendes Anlagengehäuse (3), das wenigstens einen Fluideinlass (5) zur Einleitung von Fluid in das Anlagengehäuse (3), wenigstens einen Fluidauslass (7, 9) zur Ausgabe von Fluid aus dem Anlagengehäuse (3), einen Chargiereinlass (4) zum Einbringen von Fördergut in das Anlagengehäuse (3) und eine Ausgabeöffnung zur Ausgabe von Fördergut aus dem Anlagengehäuse (3)aufweist und bis auf den wenigstens einen Fluideinlass (5), den wenigstens einen Fluidauslass (7, 9) und den Chargiereinlass (4) technisch fluiddicht ausgeführt ist,
wobei die Ausgabeöffnung ein Fluidauslass (7,9) oder ein Fluideinlass (5) des Anlagengehäuses (3) ist,
wobei ein Fluid durch den wenigstens einen Fluideinlass (5) in das Anlagengehäuse (3) eingeleitet und in einer Fluidströmungsrichtung (30), die im Wesentlichen parallel zu einer Förderrichtung (32) ist, in der Fördergut durch das Anlagengehäuse (3) transportiert wird, durch das Anlagengehäuse (3) zu dem wenigstens einen Fluidauslass (7, 9) geleitet wird
und eine Fluidatmosphäre in dem Anlagengehäuse (3) derart geregelt wird, dass sie einem Eindringen von einem Störfluid aus einem dem Anlagengehäuse (3) benachbarten Nachbaraggregat in das Anlagengehäuse (3) entgegenwirkt,
wobei ein Fluiddruck in dem Anlagengehäuse (3) auf einen Sollwert geregelt wird, der größer als ein momentaner Störfluiddruck in dem Nachbaraggregat ist,
**dadurch gekennzeichnet, dass**
die Förderanlage (1) ein Fluidkreislaufsystem (11) aufweist, mit welchem Fluid in das Anlagengehäuse (3) durch wenigstens einen Fluideinlass (5) eingeleitet wird und durch wenigstens einen Fluidauslass (7, 9) aus dem Anlagengehäuse (3) austretendes Fluid aufgefangen und wiederverwendet wird.

2. Verfahren nach Anspruch 1,
wobei die Förderanlage ein Absperrorgan (40) aufweist, durch das die Ausgabeöffnung verschließbar ist.

3. Verfahren nach Anspruch 2,
wobei das Absperrorgan (40) wenigstens einen Absperrschieber (42) zum Verschließen der Ausgabeöffnung aufweist.

4. Verfahren nach Anspruch 3,
wobei das Absperrorgan (40) zwei voneinander beabstandete Absperrschieber (42) zum Verschließen der Ausgabeöffnung aufweist.

5. Verfahren nach einem der vorhergehenden Ansprüche,
wobei die Förderanlage (1) wenigstens ein an dem Anlagengehäuse (3) angeordnetes Sicherheitsorgan (21) aufweist, das zum Auslass von Fluid aus dem Anlagengehäuse (3), wenn ein Fluiddruck in dem Anlagengehäuse (3) einen Druckschwellenwert überschreitet, oder zur Regelung des Fluiddrucks, um den Fluiddruck in einem kontrollierten Druckbereich zu halten, ausgebildet ist.

6. Verfahren nach einem der vorhergehenden Ansprüche,
wobei das Fluidkreislaufsystem (11) eine Strömungsmaschine (13) zum Einleiten von Fluid in das Anlagengehäuse (3) aufweist.

7. Verfahren nach einem der vorhergehenden Ansprüche,
wobei das Fluidkreislaufsystem (11) wenigstens einen Wärmetauscher (15) zur Kühlung des Fluids aufweist.

8. Verfahren nach einem der vorhergehenden Ansprüche ,
wobei das Fluidkreislaufsystem (11) eine Fluidreinigungseinheit (17) zur Reinigung aus dem Anlagengehäuse (3) austretenden Fluids aufweist.

9. Verfahren nach einem der vorhergehenden Ansprüche,
wobei die Förderanlage (1) ein Absperrorgan (40) aufweist, durch das der Chargiereinlass (4)fluiddicht verschließbar ist.

10. Verfahren nach einem der vorhergehenden Ansprüche,
wobei ein Differenzdruck zwischen dem Fluiddruck in dem Anlagengehäuse (3) und dem Störfluiddruck in dem Nachbaraggregat erfasst wird und ein in das Anlagengehäuse (3) eingeleiteter Fluidstrom in Abhängigkeit von dem Differenzdruck geregelt wird.

## Claims

1. Method for operating a conveyor system (1) for continuously or discontinuously conveying a reactive and/or hot and/or abrasive material to be conveyed along a conveying path, the conveyor system (1) comprising a system housing (3) which encases the conveying path and has at least one fluid inlet (5) for directing fluid into the system housing (3), at least one fluid outlet (7, 9) for dispensing fluid from the system housing (3), a charging inlet (4) for introducing material to be conveyed into the system housing (3), and a dispensing opening for dispensing material to be conveyed from the system housing (3), and with the exception of the at least one fluid inlet (5), the at least one fluid outlet (7, 9), and the charging inlet (4), is embodied so as to be technically fluid-tight,
wherein the dispensing opening is a fluid outlet (7, 9) or a fluid inlet (5) of the system housing (3),
wherein a fluid is directed into the system housing (3) through the at least one fluid inlet (5), and in a fluid flow direction (30), which is substantially parallel to a conveying direction (32) in which material to be conveyed is transported through the system housing (3), is directed to the at least one fluid outlet (7, 9) through the system housing (3), and
a fluid atmosphere in the system housing (3) is closed-loop controlled in such a manner that said fluid atmosphere counteracts any ingress of a disturbance fluid from a neighbouring apparatus neighbouring the system housing (3) into the system housing (3),
wherein a fluid pressure in the system housing (3) is closed-loop controlled to a nominal value which is higher than a current disturbance fluid pressure in the neighbouring apparatus,
**characterized in that**
the conveyor system (1) has a fluid recirculation system (11) by way of which fluid is directed into the system housing (3) through at least one fluid inlet (5), and fluid exiting the system housing (3) through at least one fluid outlet (7, 9) is trapped and reused.

2. Method according to Claim 1,
wherein the conveyor system (1) has a shut-off element (40) by way of which the dispensing opening is closable.

3. Method according to Claim 2,
wherein the shut-off element (40) has at least one shut-off gate (42) for closing the dispensing opening.

4. Method according to Claim 3,
wherein the shut-off element (40) has two mutually spaced apart shut-off gates (42) for closing the dispensing opening.

5. Method according to one of the preceding claims, wherein the conveyor system (1) has at least one safety element (21) which is configured for discharging fluid from the system housing (3) when a fluid pressure in the system housing (3) exceeds a pressure threshold value, or for closed-loop controlling the fluid pressure so as to maintain the fluid pressure in a monitored pressure range, which safety element (21) is disposed on the system housing (3).

6. Method according to one of the preceding claims, wherein the fluid recirculation system (11) has a turbomachine (13) for directing fluid into the system housing (3).

7. Method according to one of the preceding claims, wherein the fluid recirculation system (11) has at least one heat exchanger (15) for cooling the fluid.

8. Method according to one of the preceding claims,
wherein the fluid recirculation system (11) has a fluid purification unit (17) for purifying fluid exiting the system housing (3).

9. Method according to one of the preceding claims,
wherein the conveyor system (1) has a shut-off element (40) by way of which the charging inlet (4) is closable in a fluid-tight manner.

10. Method according to one of the preceding claims, wherein a differential pressure between the fluid pressure in the system housing (3) and the disturbance fluid pressure in the neighbouring apparatus is detected, and a fluid flow directed into the system housing (3) is closed-loop controlled as a function of the differential pressure.

## Revendications

1. Procédé de fonctionnement d'une installation d'acheminement (1) pour l'acheminement continu ou discontinu d'un produit à transporter réactif et/ou chaud et/ou abrasif le long d'un trajet d'acheminement, l'installation d'acheminement (1) comprenant un carter d'installation (3) enveloppant le trajet d'acheminement qui présente au moins une entrée de fluide (5) pour l'introduction de fluide dans le carter d'installation (3), au moins une sortie de fluide (7, 9) pour la sortie de fluide du carter d'installation (3), une entrée de chargement (4) pour introduire un produit à transporter dans le carter d'installation (3) et une ouverture de sortie pour extraire le produit à transporter du carter d'installation (3) et est réalisé en termes de technique de façon étanche aux fluides à l'exception d'au moins une entrée de fluide (5), de la au moins une sortie de fluide (7, 9) et de l'entrée de chargement (4),
dans lequel l'ouverture de sortie est une sortie de fluide (7, 9) ou une entrée de fluide (5) du carter d'installation (3), dans lequel un fluide est introduit dans le carter d'installation (3) par la au moins une entrée de fluide (5) et est guidé dans un sens d'écoulement de fluide (30), qui est essentiellement parallèle à un sens d'acheminement (32), dans lequel le produit à transporter est transporté à travers le carter d'installation (3), à travers le carter d'installation (3) vers la au moins une sortie de fluide (7, 9) et une atmosphère de fluide est réglée dans le carter d'installation (3) de manière telle qu'elle agit dans le carter d'installation (3) en sens inverse d'une introduction d'un fluide perturbateur provenant d'un agrégat adjacent contigu au carter d'installation (3),
dans lequel une pression de fluide dans le carter d'installation (3) est réglée sur une valeur de consigne qui est supérieure à une pression de fluide perturbateur momentané dans l'agrégat adjacent,
**caractérisé en ce que** l'installation d'acheminement (1) présente un système de circulation des fluides (11) avec lequel du fluide est introduit dans le carter d'installation (3) par au moins une entrée de fluide (5) et le fluide sortant du carter d'installation (3) par au moins une sortie de fluide (7, 9) est capté et réutilisé.

2. Procédé selon la revendication 1, dans lequel l'installation d'acheminement présente un organe d'arrêt (40) par lequel l'ouverture de sortie peut être verrouillée.

3. Procédé selon la revendication 2, dans lequel l'organe d'arrêt (40) présente au moins une vanne d'arrêt (42) pour verrouiller l'ouverture de sortie.

4. Procédé selon la revendication 3, dans lequel l'organe d'arrêt (40) présente deux vannes d'arrêt (42) espacées l'une de l'autre pour verrouiller l'ouverture de sortie.

5. Procédé selon l'une des revendications précédentes, dans lequel l'installation d'acheminement (1) présente au moins un organe de sécurité (21) disposé sur le carter d'installation (3), qui est conçu pour la sortie de fluide du carter d'installation (3) lorsqu'une pression de fluide dans le carter d'installation (3) dépasse une valeur seuil de pression, ou pour le réglage de la pression de fluide, afin de maintenir la pression de fluide dans une zone de pression contrôlée.

6. Procédé selon l'une des revendications précédentes, dans lequel le système de circulation des fluides (11) présente une turbomachine (13) pour l'introduction de fluide dans le carter d'installation (3).

7. Procédé selon l'une des revendications précédentes, dans lequel le système de circulation des fluides (11) présente au moins un échangeur thermique (15) pour refroidir le fluide.

8. Procédé selon l'une des revendications précédentes, dans lequel le système de circulation des fluides (11) présente une unité de nettoyage de fluide (17) pour nettoyer le fluide sortant du carter d'installation (3).

9. Procédé selon l'une des revendications précédentes, dans lequel l'installation d'acheminement (1) présente un organe d'arrêt (40) par lequel l'entrée de chargement (4) peut être verrouillée en étant étanche aux fluides.

10. Procédé selon l'une des revendications précédentes, dans lequel une pression différentielle entre la pression de fluide dans le carter d'installation (3) et la pression de fluide perturbateur dans l'agrégat adjacent est détectée et un courant de fluide introduit dans le carter d'installation (3) est réglé en fonction de la pression différentielle.
